# EUROPEAN PATENT SPECIFICATION

(11) **EP 3 633 101 B1**
(45) Date of publication and mention of the grant of the patent: **25.12.2024**
(21) Application number: 18809878.4
(22) Date of filing: 28.05.2018
(51) Int. Cl.: D06P 3/52, D06P 1/41, D06P 1/42, D06N 3/00, D06P 5/04, D06P 5/08

(54) **LEATHER-LIKE SHEET AND FIBER STRUCTURE**
LEDERBAHN UND FASERSTRUKTUR
FEUILLE DE SIMILICUIR ET STRUCTURE FIBREUSE

(30) Priority: 31.05.2017 JP 2017108178
(43) Date of publication of application: 08.04.2020
(73) Proprietor: Kuraray Co., Ltd., Okayama 710-0801 (JP)
(72) Inventor: FUJISAWA, Michinori, Okayama-shi Okayama 702-8601 (JP); ANDO, Tetsuya, Osaka-shi Osaka 530-8611 (JP); HISHIDA, Hiroyuki, Okayama-shi Okayama 702-8601 (JP); MURATE, Yasunori, Okayama-shi Okayama 702-8601 (JP)
(74) Representative: Vossius & Partner Patentanwälte Rechtsanwälte mbB
(86) International application number: PCT/JP2018/020344
(87) International publication number: WO 2018/221452

(56) References cited:
- WO-A1-2018/101016
- JP-A- 2009 074 197
- JP-A- 2009 074 197
- JP-A- H0 457 978
- JP-A- H08 209 551
- US-A- 4 604 320

## Description

### [Technical Field]

The present invention relates to a leather-like sheet and a fiber structure dyed with a blue cationic dye having an azo bond.

### [Background Art]

As a fiber structure included in a leather-like sheet such as an artificial leather, a non-woven fabric of polyester fibers is preferably used because of the excellent heat resistance and moldability. As dyes for dying polyester fibers, disperse dyes have been conventionally widely used because of the excellent color development properties. However, disperse dyes have the problem that they tend to migrate under heat or pressure, or in the presence of a solvent. To solve such a problem, an attempt also has been made to dye cationic dye-dyeable polyester fibers, to which dyeability for cationic dyes has been imparted, with a cationic dye.

For example, PTL 1 listed below discloses a napped artificial leather dyed with a cationic dye, including: a non-woven fabric of cationic dye-dyeable polyester fibers having a fineness of 0.07 to 0.9 dtex; and an elastic polymer applied inside the non-woven fabric, wherein the napped artificial leather has an L* value of ≤50, a grade of color difference, determined in an evaluation of color migration to PVC under a load of 0.75 kg/cm at 50°C for 16 hours, of 4 or more, a tear strength per mm of thickness of 30 N or more, and a peel strength of 3 kg/cm or more.

Meanwhile, a fiber structure of cationic dye-dyeable fibers dyed with a blue cationic dye, which is one of cationic dyes, has disadvantages. Specifically, a blue cationic dye does not easily develop a bright blue color, and has a low lightfastness, thus making it difficult to achieve both the development of a bright blue color and high lightfastness. In particular, ultrafine fibers having a low fineness have the problem that they do not develop a bright blue color unless a large amount of a blue cationic dye is exhausted, in which case the color of the ultrafine fibers tends to fade.

As the blue cationic dye, for example, PTL 2 listed below describes C.I. Basic Blue 54, which is an azo-based blue dye, as an example of the dye for dying aromatic polyamide fibers.

As for the fiber structure dyed with a cationic dye, PTL 3 listed below discloses a fully aromatic polyamide fiber structure that is dyed with C.I. Basic Blue 9, which is a thiazine-based blue cationic dye, and has been treated with a tannic acid-based compound.
PTL 4 discloses a leather like sheet comprising a fiber structure dyed with Aizen Cathilon Blue CD-RLH which is a cationic azo dye (C.I. Basic Blue 66) and a polyurethane applied into internal voids of the fiber structure.

### [Citation List]

### [Patent Literatures]

[PTL 1] WO 2016/147671
[PTL 2] Japanese Laid-Open Patent Publication No. 2013-209776
[PTL 3] Japanese Laid-Open Patent Publication No. 2009-74197
[PTL 4] US 4 604 320 A

### [Summary of Invention]

### [Technical Problem]

The present inventors have known that, among blue cationic dyes, a blue cationic dye having an azo bond, such as C.I. Basic Blue 54, is a dye that achieves both the development of a bright blue color and light resistance. However, the inventors have noticed that blue cationic dyes having an azo bond are problematic in that they are discolored through hydrolysis under an environment with high temperature and high humidity, and gradually becomes reddish. For this reason, for example, in a situation where fibers dyed with a dye containing a blue cationic dye having an azo bond are stored for a long period of time during container transportation by boat, or in a warehouse or the like in which the temperature and the humidity become high, they would undergo discoloration. Accordingly, the inventors have noticed that, although a leather-like sheet and a fiber structure dyed with a dye containing a blue cationic dye having an azo bond is excellent in color development properties and light resistance, in practice, there is a need for improvement in the moist heat discoloration resistance thereof.

It is an object of the present invention to provide a leather-like sheet or fiber structure that is dyed with a blue cationic dye having an azo bond, and has an improved moist heat discoloration resistance.

### [Solution to Problem]

An aspect of the present invention is directed to a leather-like sheet including: a fiber structure including cationic dye-dyeable polyester fibers dyed with a dye containing a blue cationic dye having an azo bond, such as C.I. Basic Blue 54; and an elastic polymer applied into internal voids of the fiber structure, wherein the leather-like sheet further includes a polyhydric phenol derivative having a sulfonic acid group.

Such a leather-like sheet dyed with a blue cationic dye having an azo bond has excellent moist heat discoloration resistance.

As the blue cationic dye having an azo bond, it is particularly preferable to use C.I. Basic Blue 54, because a leather-like sheet having the color development properties for bright blue, light resistance and moist heat discoloration resistance due to its particularly excellent color development properties can be obtained.

It is also preferable that the fibers that form the fiber structure is ultrafine fiber having a fineness of 0.05 to 1 dtex, because the effects of the present invention become particularly prominent. In the case of dyeing fibers, the total surface area of the fibers is larger when thin fibers are used than when thick fibers are used, and it is therefore difficult to achieve color development of a bright color unless a larger amount of dye is exhausted. However, if the amount of exhaustion of a blue cationic dye having an azo bond is larger, the color of the fibers tends to fade under moist heat conditions. Accordingly, when thin fibers are dyed with a blue cationic dye having an azo bond, the color of the fibers is more likely to fade under moist heat conditions as compared with a case where thick fibers are dyed. According to the present invention, high moist heat discoloration resistance can also be achieved when ultrafine fibers having a fineness of 0.05 to 1 dtex are dyed with a blue cationic dye having an azo bond. The fibers are polyester fibers because of the particularly excellent fastness and shape stability.

Preferably, the leather-like sheet has a color difference (ΔE) before and after a moist heat treatment, determined when subjected to the moist heat treatment at 80°C and a humidity of 90% for 48 hours, of ΔE ≤2, because of the particularly excellent moist heat discoloration resistance.

Preferably, the leather-like sheet has a surface having an L* of ≤35 in a color coordinate space (L*a*b* color space), because the effects of the present invention become particularly prominent.

Preferably, the leather-like sheet is a suede-like artificial leather whose surface has been napped.

Another aspect of the present invention is directed to a fiber structure including fibers dyed with a dye containing a blue cationic dye having an azo bond, and also a polyhydric phenol derivative having anionic properties.

Another aspect of the present invention is directed to a leather-like sheet including: a fiber structure including fibers dyed with a dye containing a blue cationic dye having an azo bond; and an elastic polymer applied into internal voids of the fiber structure, wherein the leather-like sheet has a color difference (ΔE) before and after a moist heat treatment, determined when subjected to the moist heat treatment at 80°C and a humidity of 90% for 48 hours, of ΔE ≤2.

Another aspect of the present invention is directed to a fiber structure including polyester fibers dyed with a dye containing a blue cationic dye having an azo bond, wherein the fiber structure has a color difference (ΔE) before and after a moist heat treatment, determined when subjected to the moist heat treatment at 80°C and a humidity of 90% for 48 hours, of ΔE ≤2.

### [Advantageous Effects of Invention]

According to the present invention, a leather-like sheet or fiber structure that is dyed with a blue cationic dye having an azo bond, and has excellent moist heat discoloration resistance can be obtained.

### [Description of Embodiment]

Hereinafter, a preferred embodiment of the present invention will be described specifically.

Examples of the fiber structure used in the present embodiment include a non-woven fabric, a woven fabric, and a knitted fabric including cationic dyeable fibers. Among these, a non-woven fabric, in particular, a non-woven fabric of ultrafine fibers is preferable in that the effects of the present invention can become prominent

The cationic dye-dyeable fibers include cationic dyeable polyester fibers having an anionic group that exhibits the easy dyeability or the dyeability for a cationic dye. The cationic dyeable polyester fibers are excellent in the fastness and the shape stability when used for an artificial leather.

Specific examples of the cationic dyeable polyester fibers include polyester fibers containing, as a copolymer unit, a monomer component having an anionic group for imparting cationic dyeability. Specific examples of the monomer component for imparting cationic dyeability include: alkali metal salts (lithium salt, sodium salt, potassium salt, rubidium salt, and cesium salt) of 5-sulfoisophthalic acid; 5-tetraalkyl phosphonium sulfoisophthalic acid such as 5-tetrabutyl phosphonium sulfoisophthalic acid and 5-ethyl tributyl phosphonium sulfoisophthalic acid; 5-tetraalkyl ammonium sulfoisophthalic acid such as 5-tetrabutyl ammonium sulfoisophthalic acid and 5-ethyl tributyl ammonium sulfoisophthalic acid; and a tetraalkyl phosphonium salt of 3,5-dicarboxy benzenesulfonic acid. These may be used alone, or in a combination of two or more.

The fineness of the cationic dye-dyeable fibers is not particularly limited, and it is possible to use, for example, regular fibers having a fineness exceeding 1 dtex, or ultrafine fibers having a fineness of 1 dtex or less. The fineness is preferably 0.05 to 1 dtex in view of the fact that the effects of the present invention become prominent, and the fineness is more preferably 0.07 to 0.5 dtex, particularly preferably 0.1 to 0.4 dtex in view of the fact that the improvement in the moist heat discoloration resistance when the fibers are colored in a dark color becomes more prominent. When the fibers are thin, it is difficult to sufficiently achieve the development of a blue color unless the amount of exhaustion of the blue cationic dye having an azo bond is increased. When the dye exhaustion amount is large, the discoloration under a moist heat environment becomes noticeable, so that the effects of the present invention become particularly prominent.

If necessary, a colorant such as carbon black, a light resisting agent, an antifungal agent, and the like may be mixed with the cationic dye-dyeable fibers, so long as the effects of the present invention are not impaired.

Examples of the leather-like sheet of the present embodiment include an artificial leather and a synthetic leather that can be obtained by impregnating an elastic polymer into the internal voids of the above-described fiber structure.

Specific examples of the elastic polymer impregnated into the internal voids of the fiber structure include polyurethanes, acrylonitrile elastomers, olefin elastomers, polyester elastomers, polyamide elastomers, and acrylic elastomers. The ratio of the elastic polymer contained in the leather-like sheet is not particularly limited, but is preferably about 1 to 50 mass%, more preferably about 5 to 30 mass%. The leather-like sheet is preferably a suede- or nubuck-like napped leather-like sheet in which fibers on the surface thereof include fibers that have been napped by napping such as buffing treatment.

The leather-like sheet or fiber structure including the cationic dye-dyeable fibers according to the present embodiment is dyed with a dye containing a blue cationic dye having an azo bond. The blue cationic dye having an azo bond is excellent in the color development properties for blue and the light resistance.

Specific examples of the blue cationic dye having an azo bond include C.I. Basic Blue 54 and C.I. Basic Blue 159. Note that "blue cationic dye" in the present embodiment means a blue cationic dye including "Basic Blue" in the color index name (C.I.). Among these, C.I. Basic Blue 54 is preferable because of the excellent development of a bright blue color.

In addition to the blue cationic dye having an azo bond, another dye may be mixed in combination with the dye for dyeing the leather-like sheet or the fiber structure of the present embodiment. Examples of the cationic dye other than the blue cationic dye having an azo bond include oxazine-based blue cationic dyes such as C.I. Basic Blue 3, C.I. Basic Blue 6, C.I. Basic Blue 10, C.I. Basic Blue 12, C.I. Basic Blue 75, and C.I. Basic Blue 96, thiazine-based blue cationic dyes such as C.I. Basic Blue 9, coumarin-based dyes such as C.I. Basic Yellow 40, methine-based dyes such as C.I. Basic Yellow 21, azomethine-based dye such as C.I. Basic Yellow 28, as well as C.I. Basic Red 29 and C.I. Basic Red 46, which are azo-based red dyes, and C.I. Basic Violet 11, which is a xanthene-based dye.

The dyeing method is not particularly limited, and examples thereof include methods in which dyeing is performed using a dyeing machine such as a jet dyeing machine, a beam dyeing machine, or a jigger. As for the conditions for dyeing processing, dyeing may be performed at a high pressure, but it is preferable to perform dyeing at normal pressure in that the environmental load is low, and the dyeing cost can be reduced, because the fiber structure of the present embodiment can be dyed at normal pressure. In the case of performing dyeing at normal pressure, the dyeing temperature is preferably 60 to 100°C, more preferably 80 to 100°C. During dyeing, a dyeing assistant such as acetic acid or mirabilite may be used.

In the case of performing dyeing using a cationic dye, the concentration of the cationic dye in a dye liquid depends on the fineness of the cationic dye-dyeable fibers; however, the concentration is in the range of preferably 0.5 to 20% owf, more preferably 1.0 to 15% owf, relative to the cationic dyeable fibers, from the viewpoint of providing well-balanced color development properties and migration resistance. When the concentration of the cationic dye exhausted onto the fibers is too high, an excessively large amount of the cationic dye is exhausted without being fixed to the dye sites, so that the dye tends to migrate. When the concentration of the cationic dye exhausted onto the fibers is too low, it tends to be difficult for the dye to develop a dark color.

In the present embodiment, it is preferable that the leather-like sheet or fiber structure dyed with a cationic dye is subjected to a washing treatment in a hot water bath containing an anionic surfactant, thereby removing a cationic dye having a low bonding strength. With such a washing treatment, the cationic dye having a low bonding strength is sufficiently removed, so that color migration from the dyed leather-like sheet or fiber structure to another article is less likely to occur. Specific examples of the anionic surfactant include Sordine R manufactured by NISSEI KASEI CO. LTD., SENKANOL A-900 manufactured by SENKA corporation, and Meisanol KHM manufactured by Meisei Chemical Works, Ltd.

The washing treatment in the hot water bath containing an anionic surfactant is performed in a hot water bath at preferably 50 to 100°C, more preferably 60 to 80°C. The washing time is preferably about 10 to 30 minutes, more preferably about 15 to 20 minutes. Also, the washing may be repeated once or more, preferably twice or more.

The moist heat discoloration resistance can be improved by applying a polyhydric phenol derivative having anionic properties to a leather-like sheet or fiber structure dyed with a dye containing a blue cationic dye having an azo bond. Such polyhydric phenol derivative having anionic properties include a polyhydric phenol derivative having an anionic group such as a sulfonic acid group, used as a moisture-fastness improving agent for nylon fibers dyed with an acid dye, and more specific examples thereof include Dimafix, which is a formalin condensate of a sulfonated product of an aromatic derivative, manufactured by Meisei Chemical Works, Ltd. The content of the polyhydric phenol derivative having anionic properties in the leather-like sheet or the fiber structure is not particularly limited, but is preferably about 70 to 200% relative to the amount of the dye attached, since the moist heat discoloration resistance can be sufficiently improved.

If necessary, a light resisting agent can be mixed with the leather-like sheet or the fiber structure. Specific examples of the light resisting agent include a benzotriazole-based light resisting agent, a triazine-based light resisting agent, and a benzophenone-based light resisting agent. These may be used alone or in a combination of two or more.

It is preferable that the leather-like sheet or fiber structure dyed with a dye containing a blue cationic dye having an azo bond according to the present embodiment is dyed in a dark color, specifically, a color having an L* value in the L*a*b* color system, of preferably L* ≤35, more preferably L* ≤30, because the effects of the present invention become particularly prominent.

In this manner, a leather-like sheet or fiber structure dyed with a cationic dye containing a blue cationic dye having an azo bond according to the present embodiment can be obtained. It is preferable that the leather-like sheet or the fiber structure of the present embodiment has high moist heat discoloration resistance such that it has a color difference (ΔE), determined, for example, when subjected to a moist heat treatment at 80°C and a humidity of 90% for 48 hours, of preferably ΔE ≤2, more preferably ΔE ≤1.4, particularly preferably ΔE ≤1. In particular, even in the case of using a fiber structure of ultrafine fibers having a fineness of 0.05 to 1 dtex, it is preferable that the leather-like sheet or the fiber structure has high moist heat discoloration resistance such that it has a color difference (ΔE), determined when subjected to a moist heat treatment at 80°C and a humidity of 90% for 48 hours, of preferably ΔE ≤2, more preferably ΔE ≤1.4, particularly preferably ΔE ≤1.

### [Examples]

Hereinafter, the present invention will be described more specifically by way of examples. It should be appreciated that the scope of the present invention is by no means limited by the examples. First, various dyes used in the examples will be collectively shown below.

### (Dye)

- C.I. Basic Blue 54: Nichilon Blue-GL (blue cationic dye having an azo bond) (manufactured by NISSEI KASEI CO. LTD.)
- C.I. Basic Blue 159: Nichilon Blue-AZN (blue cationic dye having an azo bond) (manufactured by NISSEI KASEI CO. LTD.)
- C.I. Basic Blue 3: Nichilon Blue-7G (oxazine-based blue cationic dye) (manufactured by NISSEI KASEI CO. LTD.)
- C.I. Basic Blue 75: Nichilon Blue-350 (oxazine-based blue cationic dye) (manufactured by NISSEI KASEI CO. LTD.)
- C.I. Basic Yellow 28: Nichilon Golden Yellow-GL (azomethine-based yellow cationic dye) (manufactured by NISSEI KASEI CO. LTD.)
- C.I. Basic Red 29: Nichilon Red-GL (azo-based red cationic dye) (manufactured by NISSEI KASEI CO. LTD.)

### [Example 1]

A non-woven fabric of island-in-the-sea composite fibers including cationic dye-dyeable polyester fibers as the island component and water-soluble polyvinyl alcohol as the sea component was impregnated with a self-emulsified aqueous polyurethane resin, and thereafter the sea component was extracted, thus obtaining an artificial leather gray fabric including a non-woven fabric of cationic dye-dyeable polyester fibers having an average fineness of 0.2 dtex and a polyurethane ratio of 10 mass%. Then, the artificial leather gray fabric was sliced, and the surface thereof was buffed, and the gray fabric was thus finished so as to have a thickness of 0.78 mm and an apparent density of 0.49 g/cm³.

Then, as shown in Table 1, the artificial leather gray fabric was dyed with a dye liquid containing 4% owf of Nichilon Blue-GL, 2% owf of Nichilon Golden Yellow-GL, and 2% owf of Nichlon Red-GL, at 120°C for 40 minutes. Then, the gray fabric was soaped twice using 2 g/L of a Sordine R solution at 70°C for 20 minutes, thus obtaining an artificial leather colored in a dark navy blue.

Then, 60 owf of a polyhydric phenol derivative having anionic properties (Dimafix ESH, manufactured by Meisei Chemical Works, Ltd, a formalin condensate of a sulfonated product of an aromatic derivative) was applied to the dyed artificial leather at a bath ratio 1:20 at 80°C for 30 minutes, followed by drying. In this manner, a suede-like artificial leather to which the polyhydric phenol derivative having anionic properties had been applied was obtained.

Then, the color coordinates, the moist heat discoloration resistance, and the light resistance of the suede-like artificial leather were evaluated in the following manner.

### (Color Coordinates)

The coordinate values in the L*a*b* color system of the suede-like surface of the suede-like artificial leather were measured using a spectrophotometer (CM-3700 manufactured by Minolta). The values were calculated as an average of the values for three points evenly selected from average positions of the test piece.

### (Moist Heat Discoloration Resistance)

The suede-like artificial leather was subjected to a treatment in which it was allowed to stand for 48 hours under moist heat conditions of 80°C and 90%, followed by air-drying. Then, the color coordinates of the suede-like surface after the moist heat treatment were measured. Then, the color difference ΔE between the color coordinates before the moist heat treatment and the color coordinates after the moist heat treatment, and the values of Δa*, Δb*, and ΔL* of the suede-like surface were determined.

### (Light Resistance)

The suede-like artificial leather was irradiated with UV for 24 hours using an accelerated lightfastness tester QUV/se (45°C, illuminance: 0.78 W/m²) manufactured by Q-PANEL. Then, the color coordinates of the suede-like surface after 24 hours of UV irradiation were measured. Then, the grade of fading of the suede-like surface before and after 24 hours of UV irradiation was determined in the G37 UV Color Change mode, using the model number 600 manufactured by Datacolor.

The results are shown in Table 1 below.

**[Table 1]**

| | | Examples | | | | | Comparative Examples | | | | |
|---|---|---|---|---|---|---|---|---|---|---|---|
| Example No. | | 1 | 2 | 3 | 4 | 5 | 1 | 2 | 3 | 4 | 5 |
| Blue dye (owf) | Blue-GL (C.I. Basic Blue 54) | 4% | 4% | 4% | 4% | - | 4% | 4% | - | - | - |
| | Blue-AZN (C.I.Basic Blue 159) | - | - | - | - | 4% | - | - | 4% | - | - |
| | Blue-7G (C.I.Basic Blue 3) | - | - | - | - | - | - | - | - | 4% | - |
| | Blue-350 (C.I. Basic Blue 75) | - | - | - | - | - | - | - | - | - | 4% |
| Yellow dye (owf) | Golden Yellow-GL (C.I.Basic Yellow 28) | 2% | 2% | 2% | - | - | 2% | - | - | - | - |
| Red dye (owf) | Nichilon Red-GL (C.I.Basic Red 29) | 2% | 2% | 2% | - | - | 2% | - | - | - | - |
| Anionic polyhydric phenol derivative (owf) | | 6% | 12% | 3% | 6% | 6% | - | - | - | - | - |
| Before moist heat treatment | *L (dark 0⇔ 100 bright) | 24.7 | 25.9 | 23.8 | 29.3 | 37.5 | 24.5 | 28.9 | 37.1 | 37.6 | 52.0 |
| | *a (red+ ⇔ -green) | 1.7 | 0.97 | 1.8 | 8.9 | 2.6 | 1.7 | 9.6 | 2.4 | -26.6 | -27.9 |
| | *b (yellow+ ⇔ -blue) | -9.4 | -9.4 | -9.3 | -42.7 | -45.1 | -9.5 | -42.2 | -44.6 | -25.7 | -22.1 |
| After moist heat treatment | *L (dark 0 ⇔ 100 bright) | 25.2 | 25.7 | 24.9 | 29.7 | 37.2 | 24.6 | 28.6 | 36.9 | 37.5 | 50.8 |
| | *a (red+ ⇔ -Green) | 2.1 | 1.6 | 2.4 | 8.8 | 2.5 | 3.6 | 10.3 | 2.4 | -26.3 | -26.1 |
| | *b (yellow+ ⇔ -blue) | -8.9 | -9.0 | -8.7 | -42.0 | -44.7 | -7.3 | -40.9 | -43.8 | -25.7 | -22.3 |
| Δ*L | | 0.5 | -0.2 | 1.1 | 0.4 | -0.3 | 0.1 | -0.2 | -0.2 | -0.1 | -1.3 |
| Δ*a | | 0.4 | 0.6 | 0.6 | -0.1 | -0.1 | 1.9 | 0.7 | 0.0 | 0.2 | 1.8 |
| Δ*b | | 0.5 | 0.4 | 0.6 | 0.7 | 0.4 | 2.2 | 1.3 | 0.8 | 0.0 | -0.2 |
| Color difference 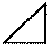 E | | 0.8 | 0.8 | 1.4 | 0.8 | 0.5 | 2.9 | 1.5 | 0.8 | 0.3 | 2.2 |
| Color | | Dark navy blue | Dark navy blue | Dark navy blue | Royal blue | Yellowish blue | Dark navy blue | Royal blue | Yellowish blue | Emerald green | Turquoise blue |
| Light resistance (QUV) | Grade | 2.0 | 1.9 | 2.0 | 1.4 | 1.1 | 1.9 | 1.4 | 1.0 | 0.8 | 1.4 |

### [Example 2]

A suede-like artificial leather was obtained in the same manner as in Example 1 except that the anionic polyhydric phenol derivative was applied at 12% owf instead of 6% owf, and was evaluated in the same manner. The results are shown in Table 1.

### [Example 3]

A suede-like artificial leather was obtained in the same manner as in Example 1 except that the anionic polyhydric phenol derivative was applied at 3% owf instead of 6% owf, and was evaluated in the same manner. The results are shown in Table 1.

### [Example 4]

A suede-like artificial leather was obtained in the same manner as in Example 1 except that the suede-like artificial leather was dyed in royal blue with a dye liquid containing only 4% owf Nichilon Blue-GL as shown in Table 1, and was evaluated in the same manner. The results are shown in Table 1.

### [Example 5]

A suede-like artificial leather was obtained in the same manner as in Example 1 except that the suede-like artificial leather was dyed in yellowish blue with a dye liquid containing only 4% owf of Nichilon Blue-AZN as shown in Table 1, and was evaluated in the same manner. The results are shown in Table 1.

### [Comparative Example 1]

A suede-like artificial leather was obtained in the same manner as in Example 1 except that the step of applying the anionic polyhydric phenol derivative was omitted, and was evaluated in the same manner. The results are shown in Table 1.

### [Comparative Example 2]

A suede-like artificial leather was obtained in the same manner as in Example 4 except that the step of applying the anionic polyhydric phenol derivative was omitted, and was evaluated in the same manner. The results are shown in Table 1.

### [Comparative Example 3]

A suede-like artificial leather was obtained in the same manner as in Example 5 except that the step of applying the anionic polyhydric phenol derivative was omitted, and was evaluated in the same manner. The results are shown in Table 1.

### [Comparative Example 4]

A suede-like artificial leather was obtained in the same manner as in Example 1 except that the suede-like artificial leather was dyed with a dye liquid containing 4% owf of Nichilon Blue-7G as shown in Table 1, and that the step of applying the anionic polyhydric phenol derivative was omitted, and was evaluated in the same manner. The results are shown in Table 1.

### [Comparative Example 5]

A suede-like artificial leather was obtained in the same manner as in Example 1 except that the suede-like artificial leather was dyed with a dye liquid containing 4% owf of Nichilon Blue-350 as shown in Table 1, and that the step of applying the anionic polyhydric phenol derivative was omitted, and was evaluated in the same manner. The results are shown in Table 1.

Referring to Table 1, for the artificial leather dyed in dark navy blue with a dye containing C.I. Basic Blue 54, which is a blue cationic dye having an azo bond, the artificial leathers of Examples 1 to 3 to which the polyhydric phenol derivative having anionic properties had been applied had a color difference ΔE of 0.8 to 1.4 after the moist heat treatment, and had significantly higher moist heat discoloration resistance than the color difference ΔE of 2.9 after the moist heat treatment of the artificial leather of Comparative Example 1 to which no polyhydric phenol derivative having anionic properties had been applied. Similarly, for the artificial leather dyed in royal blue with a dye containing C.I. Basic Blue 54, the artificial leather of Example 4 to which the polyhydric phenol derivative having anionic properties had been applied had a color difference ΔE of 0.8 after the moist heat treatment, and had significantly higher moist heat discoloration resistance than the color difference ΔE of 1.5 after the moist heat treatment of the artificial leather of Comparative Example 2 to which no polyhydric phenol derivative having anionic properties had been applied.

For the artificial leather dyed in yellowish blue having an L* of 37 with a dye containing C.I. Basic Blue 159, which is a blue cationic dye having an azo bond, the artificial leather of Example 5 to which the polyhydric phenol derivative having anionic properties had been applied had a color difference ΔE of 0.5 after the moist heat treatment, and had higher moist heat discoloration resistance than the color difference ΔE of 0.8 after the moist heat treatment of the artificial leather of Comparative Example 3 to which no polyhydric phenol derivative having anionic properties had been applied.

The artificial leather of Comparative Example 4 that had been dyed in emerald green having an L* of 37 with a dye containing C.I. Basic Blue 3, which is an oxazine-based blue cationic dye, had low light resistance. The artificial leather of Comparative Example 5 that had been dyed in turquoise blue having an L* of 52 with a dye containing C.I. Basic Blue 75 did not develop a dark blue color.

## Claims

1. A leather-like sheet comprising:
a fiber structure including polyester fibers dyed with a dye containing a blue cationic dye having an azo bond; and an elastic polymer applied into internal voids of the fiber structure,
wherein the leather-like sheet further comprises a polyhydric phenol derivative having a sulfonic acid group.

2. The leather-like sheet according to claim 1,
wherein the blue cationic dye having an azo bond contains C.I. Basic Blue 54.

3. The leather-like sheet according to claim 1 or 2,
wherein the polyester fibers have a fineness of 0.05 to 1 dtex.

4. The leather-like sheet according to any one of claims 1 to 3,
wherein the leather-like sheet has a color difference (ΔE) before and after a moist heat treatment, determined when subjected to the moist heat treatment at 80°C and a humidity of 90% for 48 hours, of ΔE ≤2,
wherein the color difference is measured as set out in the description.

5. The leather-like sheet according to any one of claims 1 to 4,
wherein the leather-like sheet has a surface having an L* of ≤35 in a color coordinate space (L*a*b* color space),
wherein the color coordinate space is measured as set out in the description.

6. The leather-like sheet according to any one of claims 1 to 5,
wherein the leather-like sheet is a suede-like artificial leather whose surface has been napped.

7. A fiber structure comprising:
polyester fibers dyed with a dye containing a blue cationic dye having an azo bond; and a polyhydric phenol derivative having a sulfonic acid group.

8. The fiber structure according to claim 7,
wherein the blue cationic dye having an azo bond contains C.I. Basic Blue 54.

9. The fiber structure according to claim 7 or 8,
wherein the polyester fibers have a fineness of 0.05 to 1 dtex.

10. The fiber structure according to any one of claims 7 to 9,
wherein the fiber structure has a surface having a color difference (ΔE), determined when subjected to a moist heat treatment at 80°C and a humidity of 90% for 48 hours, of ΔE ≤2,
wherein the color difference is measured as set out in the description.

## Patentansprüche

1. Eine lederartige Bahn, umfassend:
eine Faserstruktur, beinhaltend Polyesterfasern, welche mit einem Farbstoff gefärbt sind, der einen blauen kationischen Farbstoff mit einer Azobindung enthält; und ein elastisches Polymer, das in innere Hohlräume der Faserstruktur eingebracht ist,
wobei die lederartige Bahn ferner ein mehrwertiges Phenolderivat mit einer Sulfonsäuregruppe umfasst.

2. Die lederartige Bahn gemäß Anspruch 1,
wobei der blaue kationische Farbstoff mit einer Azobindung C.I. Basic Blue 54 enthält.

3. Die lederartige Bahn gemäß Anspruch 1 oder 2,
wobei die Polyesterfasern eine Feinheit von 0,05 bis 1 dtex aufweisen.

4. Die lederartige Bahn gemäß einem der Ansprüche 1 bis 3,
wobei die lederartige Bahn einen Farbunterschied (ΔE) vor und nach einer feuchten Wärmebehandlung von ΔE ≤2 aufweist, bestimmt durch Unterziehen einer feuchten Wärmebehandlung bei 80°C und einer Feuchtigkeit von 90% für 48 Stunden,
wobei der Farbunterschied wie in der Beschreibung beschrieben gemessen wird.

5. Die lederartige Bahn gemäß einem der Ansprüche 1 bis 4,
wobei die lederartige Bahn eine Oberfläche mit einem L* von ≤35 in einem Farbkoordinatenraum (L*a*b* Farbenraum) aufweist,
wobei der Farbkoordinatenraum wie in der Beschreibung beschrieben gemessen wird.

6. Die lederartige Bahn gemäß einem der Ansprüche 1 bis 5,
wobei die lederartige Bahn ein wildlederartiges Kunstleder ist, dessen Oberfläche aufgeraut wurde.

7. Eine Faserstruktur, umfassend:
Polyesterfasern, welche mit einem Farbstoff gefärbt sind, der einen blauen kationischen Farbstoff mit einer Azobindung enthält; und ein mehrwertiges Phenolderivat mit einer Sulfonsäuregruppe.

8. Die Faserstruktur gemäß Anspruch 7,
wobei der blaue kationische Farbstoff mit einer Azobindung C.I. Basic Blue 54 enthält.

9. Die Faserstruktur gemäß Anspruch 7 oder 8,
wobei die Polyesterfasern eine Feinheit von 0,05 bis 1 dtex aufweisen.

10. Die Faserstruktur gemäß einem der Ansprüche 7 bis 9,
wobei die Faserstruktur eine Oberfläche mit einen Farbunterschied (ΔE) von ΔE ≤2 aufweist, bestimmt durch Unterziehen einer feuchten Wärmebehandlung bei 80°C und einer Feuchtigkeit von 90% für 48 Stunden,
wobei der Farbunterschied wie in der Beschreibung beschrieben gemessen wird.

## Revendications

1. Feuille de similicuir comprenant :
une structure fibreuse incluant des fibres de polyester colorées avec un colorant contenant un colorant cationique bleu ayant une liaison azoïque ; et un polymère élastique appliqué dans des vides internes de la structure fibreuse,
laquelle feuille de similicuir comprend en outre un dérivé de phénol polyhydrique ayant un groupe acide sulfonique,

2. Feuille de similicuir selon la revendication 1, dans laquelle le colorant cationique bleu ayant une liaison azoïque contient du C.I. Basic Blue 54,

3. Feuille de similicuir selon la revendication 1 ou 2, dans laquelle les fibres de polyester ont une finesse de 0,05 à 1 dtex.

4. Feuille de similicuir selon l'une quelconque des revendications 1 à 3,
laquelle feuille de similicuir a une différence de couleur (ΔE) avant et après un traitement à la chaleur humide, déterminée quand elle a été soumise au traitement à la chaleur humide à 80 °C et sous une humidité de 90 % pendant 48 heures, de ΔE ≤ 2,
dans laquelle la différence de couleur est mesurée comme indiqué dans la description.

5. Feuille de similicuir selon l'une quelconque des revendications 1 à 4,
laquelle feuille de similicuir a une surface ayant une valeur L* ≤ 35 dans un espace colorimétrique (espace colorimétrique L*a*b*),
dans laquelle l'espace colorimétrique est mesuré comme indiqué dans la description.

6. Feuille de similicuir selon l'une quelconque des revendications 1 à 5, laquelle feuille de similicuir est un cuir artificiel de type suédine dont la surface a été traitée.

7. Structure fibreuse comprenant des fibres de polyester colorées avec un colorant contenant un colorant cationique bleu ayant une liaison azoïque ; et un dérivé de phénol polyhydrique ayant un groupe acide sulfonique,

8. Structure fibreuse selon la revendication 7, dans laquelle le colorant cationique bleu ayant une liaison azoïque contient du C.I. Basic Blue 54,

9. Structure fibreuse selon la revendication 7 ou 8, dans laquelle les fibres de polyester ont une finesse de 0,05 à 1 dtex.

10. Structure fibreuse selon l'une quelconque des revendications 7 à 9,
laquelle structure fibreuse a une surface ayant une différence de couleur (ΔE), déterminée quand elle a été soumise à un traitement à la chaleur humide à 80 °C et sous une humidité de 90 % pendant 48 heures, de ΔE ≤ 2,
dans laquelle la différence de couleur est mesurée comme indiqué dans la description.
